# FASCICULE DE BREVET EUROPEEN

(11) **EP 3 555 452 B1**
(45) Date de publication et mention de la délivrance du brevet: **02.09.2020**
(21) Numéro de dépôt: 17822423.4
(22) Date de dépôt: 14.12.2017
(51) Int. Cl.: F02K 9/95

(54) **SYSTEME D'ALLUMAGE AMELIORE POUR MOTEUR D'ENGIN SPATIAL**
ZÜNDVORRICHTUNG EINES RAKETENTRIEBWERKS
IGNITION DEVICE OF A ROCKET ENGINE

(30) Priorité: 15.12.2016 FR 1601784
(43) Date de publication de la demande: 23.10.2019
(73) Titulaire: ArianeGroup SAS, 75015 Paris (FR)
(72) Inventeur: LE CRAS, Jean-Luc, 27950 Saint-Marcel (FR); GOMET, Laurent, 27120 Houlbec-Cocherel (FR)
(74) Mandataire: Cabinet Beau de Loménie
(86) Numéro de dépôt international: PCT/FR2017/053574
(87) Numéro de publication internationale: WO 2018/109401

(56) Documents cités:
- DE-B- 1 152 640
- US-A- 2 674 088
- US-B2- 6 912 839

## Description

### DOMAINE DE L'INVENTION

Le présent exposé concerne le domaine des moteurs d'engins spatiaux, et vise plus précisément les systèmes d'allumage d'un moteur d'engin spatial.

### ETAT DE LA TECHNIQUE ANTERIEURE

Les moteurs d'engins spatiaux tels que des fusées sont typiquement allumés au moyen d'allumeurs pyrotechniques installés dans la chambre de combustion du moteur.

De tels systèmes d'allumage présentent cependant des contraintes. On peut citer en premier lieu les contraintes liées à la sécurité d'un tel système. On comprend en effet qu'un allumeur pyrotechnique disposé dans une chambre de combustion d'un moteur nécessite des procédures spécifiques afin d'assurer une sécurité optimale lors du fonctionnement.

Par ailleurs, lors de l'allumage lorsque le système d'allumage est situé en aval du col de la chambre de combustion (ce qui est typiquement le cas d'un allumage par le sol), un front de pression est généré. Ce front de pression remonte le divergent, passe le col de la chambre, initie la combustion allume la chambre de combustion et entraine la montée en régime du moteur. L'allumage entraine donc une inversion des charges au niveau du divergent, ce qui peut donc générer des charges mécaniques importantes sur la structure du moteur. Le document US 2674088 présente un système d'allumage selon le préambule de la revendication 1.

Le présent exposé vise donc à proposer un système d'allumage permettant de s'affranchir de ces différents inconvénients.

### PRESENTATION DE L'INVENTION

Le présent exposé concerne l'application d'un transformateur de Tesla pour réaliser l'allumage d'un moteur d'engin spatial.

Le présent exposé propose ainsi un système d'allumage pour moteur d'un engin spatial présentant une chambre de combustion et une tuyère; le système d'allumage étant adapté pour être inséré dans la tuyère et comprenant un circuit électrique de génération d'étincelles configuré de manière à générer des étincelles dans la tuyère, de manière à provoquer un allumage de la chambre de combustion.

Le circuit électrique de génération d'étincelles est par exemple un transformateur de Tesla.

Le circuit électrique de génération d'étincelles comprend typiquement un circuit primaire comprenant un générateur de tension, transformateur élévateur de tension, un éclateur, un condensateur primaire et une bobine primaire, et un circuit secondaire comprenant une bobine secondaire et un condensateur secondaire, le condensateur secondaire étant configuré de manière à générer des arcs électriques. Le circuit primaire et le circuit secondaire sont typiquement configurés de manière à présenter des fréquences de fonctionnement entrant en résonance.

Selon un exemple, le circuit électrique de génération d'étincelles est configuré de manière à ce que des étincelles soient générées au niveau d'un col de tuyère.

Le système d'allumage comprend typiquement un mât réalisé en polystyrène métallisé, à l'extrémité duquel est formé le condensateur secondaire.

Le système d'allumage comprend typiquement une base adaptée pour engager une extrémité libre d'un divergent de tuyère, de manière à permettre un maintien en position dudit système d'allumage dans le divergent.

Le présent exposé concerne également un ensemble comprenant un moteur d'un engin spatial présentant une chambre de combustion et une tuyère, un système d'allumage tel que défini précédemment, ledit système d'allumage étant inséré dans la tuyère de manière à générer des étincelles dans ladite tuyère et ainsi permettre un allumage de la chambre de combustion.

Le présent exposé concerne également un procédé d'allumage d'un moteur d'engin spatial, dans lequel on positionne un système d'allumage tel que défini précédemment dans la tuyère d'un moteur d'engin spatial, on alimente en tension le circuit électrique de génération d'étincelles, de manière à générer des étincelles et ainsi initier la combustion dans une chambre à combustion du moteur, et une fois la combustion initiée, le système d'allumage est éjecté du divergent.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un système selon un aspect de l'invention,
- la figure 2 est un schéma électrique détaillant un mode de réalisation d'un système selon un aspect de l'invention,
- la figure 3 est un diagramme schématisant un procédé selon un aspect de l'invention.

### DESCRIPTION DETAILLEE D'EXEMPLES DE REALISATION

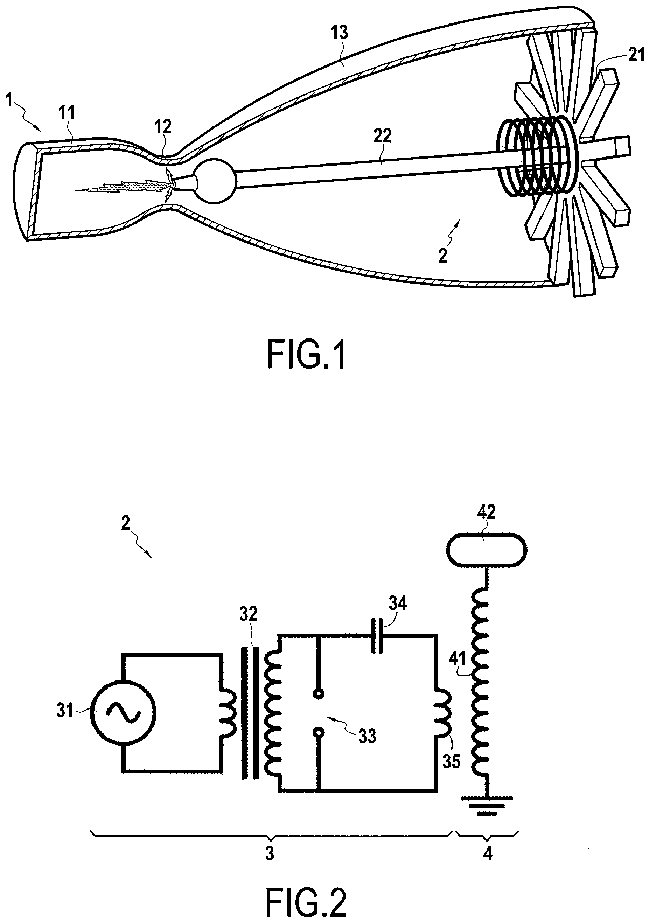

La figure 1 représente schématiquement un système d'allumage selon un aspect de l'invention.

On représente schématiquement sur cette figure une tuyère 1 d'un moteur d'engin spatial. La tuyère 1 comprend une portion proximale 11 adjacente à une chambre de combustion du moteur, un col 12 et un divergent 13 formant l'extrémité distale libre de la tuyère 1. Le divergent a une forme générale de tronc de cône, dont la section augmente depuis l'extrémité adjacente au col 12 jusqu'à son extrémité libre. Le col 12 définit une section réduite entre la portion proximale 11 et le divergent 13. La portion proximale 11 telle que représentée présente une forme générale cylindrique de révolution et correspond typiquement à la chambre de combustion du moteur.

Un système d'allumage 2 est ici positionné dans la tuyère 1.

Le système d'allumage 2 tel que représenté comprend une base 21 adaptée pour engager le divergent 13 et ainsi venir se maintenir en position dans le divergent 13. Plus précisément, la base 21 présente une périphérie externe adaptée pour venir se conformer à une section donnée du divergent 13. Dans l'exemple représenté, la base 21 est formée d'une portion centrale circulaire de laquelle s'étendent une pluralité de rayons, les extrémités radiales de ces rayons étant ainsi adaptées pour venir au contact d'une section du divergent 13. D'autres modes de réalisation de la base 21 sont bien entendu possibles. La base 21 présente typiquement des ouvertures afin de permettre à un flux d'air de la traverser. Dans l'exemple représenté, les ouvertures sont formées par les espacements entre les différents rayons. Les ouvertures permettent l'évacuation de la pression interne au divergent 13 pendant la phase d'allumage, afin de conserver en place le système d'allumage 2 le plus longtemps possible, avant sa propre combustion par les gaz chauds du moteur. La base 21 peut être en polystyrène ou dans un autre matériau relativement léger, typiquement de masse volumique inférieure à 0,1 gramme par centimètre cube.

Un mât 22 s'étend depuis la base 21, selon une direction sensiblement perpendiculaire à la base 21. Le mât 22 est ainsi configuré de manière à s'étendre au sein du divergent 13 lorsque la base 21 est insérée dans le divergent 13 ; le mât 22 s'étendant alors typiquement selon l'axe du divergent 13. L'extrémité du mât 22 opposée à la base 21 comprend un générateur d'étincelles, adapté pour sélectivement générer des étincelles sensiblement au niveau du col 12 de la tuyère 1. Une bobine s'étend également depuis la base 21, dans la même direction que le mât 22. Le fonctionnement de cette bobine sera décrit ci-après en référence à la figure 2.

Du fait des matériaux et/ou de la géométrie employée dans ce mode de réalisation, la masse du système d'allumage 2 est faible de telle sorte que la base 21 peut s'arcbouter dans le divergent 13 sans risque d'endommagement pour le divergent 13. Des moyens mécaniques de fixation ne sont pas nécessaires.

On décrit à présent en référence à la figure 2 un exemple de mode de réalisation d'un schéma électrique d'un système d'allumage 2.

Le système d'allumage 2 tel que proposé comprend un circuit primaire 3 et un circuit secondaire 4

Le circuit primaire 3 réalise ici un rôle d'alimentation électrique et de montée en tension.

Le circuit secondaire 4 réalise la fonction de génération d'étincelles.

Le circuit primaire 3 comprend un générateur de tension 31 associé à un transformateur 32 élévateur de tension, permettant de générer une haute tension alternative. Le circuit primaire 3 comprend également un éclateur 33 et un condensateur primaire 34 montés en parallèle, ainsi qu'une bobine primaire 35. La bobine primaire est montée en série avec l'éclateur 33 ou avec le condensateur primaire 34 (l'exemple représenté sur la figure 2 correspond à ce mode de réalisation).

Le circuit secondaire 4 comprend une bobine secondaire 41 et un condensateur secondaire 42. La bobine secondaire 41 est reliée d'une part au condensateur secondaire 42, et d'autre part à une masse. Le condensateur secondaire 42 est typiquement réalisé en polystyrène recouvert d'une métallisation.

La bobine primaire 35 est typiquement large et comprend typiquement peu de spires. A l'inverse, la bobine secondaire 41 comprend typiquement un nombre important de spires de diamètre moindre. La bobine secondaire 41 est typiquement enroulée autour du mât 22, tandis que la bobine primaire 35 est typiquement disposée à distance du mât 22, autour de son extrémité adjacente à la base 21.

En fonctionnement, l'alimentation composée du générateur de tension 31 et du transformateur 32 va charger le condensateur primaire 34. Une fois la tension aux bornes du condensateur primaire 34 suffisante, un arc électrique traverse l'éclateur 33 et le condensateur primaire 34 se décharge alors dans la bobine primaire 35, générant dans la bobine primaire 35 un courant alternatif de haute fréquence et de haute intensité.

La bobine produit alors un champ électromagnétique dans le milieu l'entourant, ce champ étant également intense et présentant des variations de fréquence élevée. De champ électromagnétique va alors induire une variation de flux aux bornes de la bobine secondaire 41 qui est disposée à proximité de la bobine primaire 35, la différence de potentiel aux bornes de la bobine secondaire 41 étant proportionnelle au rapport entre le nombre de spires de la bobine primaire 35 et de la bobine secondaire 41.

Afin de maximiser la différence de potentiel aux bornes de la bobine secondaire 41, la bobine primaire 35 et la bobine secondaire 41 sont configurées de manière à ce que le circuit primaire 3 et le circuit secondaire 4 soient en résonnance. Cela peut être réalisé par exemple en influant sur le nombre de spires de la bobine primaire 35.

La tension aux bornes de la bobine secondaire 41 étant ainsi maximisée, la tension au niveau du condensateur secondaire 42 est supérieure à la rigidité diélectrique de l'air, ce qui provoque la génération d'arcs électriques depuis le condensateur secondaire 42. Dans le système tel que proposé, les arcs électriques sont donc générés au sein de la tuyère 1, typiquement au niveau du col 12 de la tuyère 1 ou au niveau de la chambre de combustion, de manière à permettre l'allumage de la chambre de combustion.

Le fonctionnement d'un tel circuit est bien connu sous la désignation de bobine de Tesla ou transformateur de Tesla, dont les applications connues se limitent cependant aux effets spéciaux ou au domaine de la musique.

Une fois le moteur allumé, le système d'allumage 2 est éjecté et détruit par la flamme générée par la chambre de combustion.

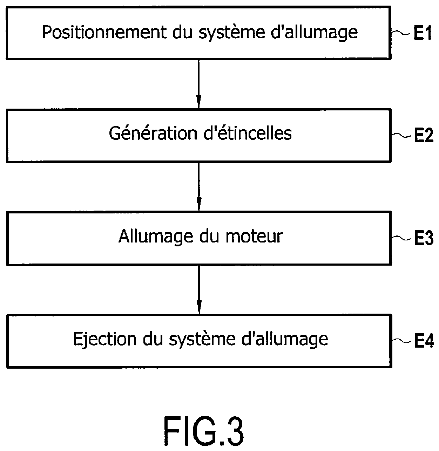

La figure 3 représente schématiquement un procédé mettant en œuvre un tel système d'allumage 2 pour le démarrage d'un moteur d'engin spatial.

Lors d'une première étape E1, on positionne le système d'allumage 2 dans la tuyère 1 d'un moteur d'engin spatial, comme déjà décrit en référence à la figure 1.

Lors d'une deuxième étape E2, on génère des étincelles au sein de la tuyère 1 à l'aide du système d'allumage 2, comme déjà décrit précédemment en référence à la figure 2.

Cette génération d'étincelles entraine une étape E3 d'allumage du moteur et d'initiation de la combustion.

Le système d'allumage 2 est alors éjecté de la tuyère 1 lors d'une étape E4, et est détruit par la flamme générée par le moteur une fois mis en fonctionnement.

Le système d'allumage tel que proposé et le procédé associé consistent donc à exploiter une bobine de Tesla pour réaliser un allumeur à usage unique pour un moteur d'engin spatial. Un tel système d'allumage est avantageux par rapport à des systèmes conventionnels tels que des allumeurs pyrotechniques du fait de son coût réduit et des contraintes de sécurité moindres qu'il nécessite. On note par ailleurs qu'un tel système d'allumage peut être exploité que ce soit dans le cadre de bancs d'essais ou dans le cas de lancements.

Une telle approche d'un système d'allumage à usage unique n'avait pas été envisagée pour l'allumage de lanceurs d'engins spatiaux.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Système d'allumage (2) pour moteur d'un engin spatial présentant une chambre de combustion (11), une tuyère (1) et un circuit électrique de génération d'étincelles configuré de manière à générer des étincelles dans la tuyère (1), de manière à provoquer un allumage de la chambre de combustion (11); le système d'allumage (2) étant adapté pour être inséré dans la tuyère (1), le système d'allumage (2) étant **caractérisé en ce qu'**il comprend une base (21), un mât (22) configuré de manière à s'étendre au sein de la tuyère (1) lorsque la base (21) engage la tuyère (1), et **en ce que** le circuit électrique de génération d'étincelles est situé à une extrémité du mât (22) opposée à la base (21).

2. Système d'allumage (2) selon la revendication 1, dans lequel le circuit électrique de génération d'étincelles est un transformateur de Tesla.

3. Système d'allumage (2) selon l'une des revendications 1 ou 2, dans lequel le circuit électrique de génération d'étincelles comprend un circuit primaire (3) comprenant un générateur de tension (31), transformateur (32) élévateur de tension, un éclateur (33), un condensateur primaire (34) et une bobine primaire (35), et un circuit secondaire (4) comprenant une bobine secondaire (41) et un condensateur secondaire (42), le condensateur secondaire (42) étant configuré de manière à générer des arcs électriques.

4. Système d'allumage (2) selon la revendication 3, dans lequel le circuit primaire (3) et le circuit secondaire (4) sont configurés de manière à présenter des fréquences de fonctionnement entrant en résonance.

5. Système d'allumage (2) selon la revendication 3 ou 4, dans lequel le mât (22) est réalisé en polystyrène métallisé, le condensateur secondaire (42) étant formé à l'extrémité du mât (22).

6. Système d'allumage (2) selon l'une des revendications 1 à 5, dans lequel le circuit électrique de génération d'étincelles est configuré de manière à ce que des étincelles soient générées au niveau d'un col (12) de tuyère (1).

7. Système d'allumage (2) selon l'une des revendications 1 à 6, dans lequel la base (21) est adaptée pour engager une extrémité libre d'un divergent (13) de tuyère (1), de manière à permettre un maintien en position dudit système d'allumage (2) dans le divergent (13).

8. Ensemble comprenant
- un moteur d'un engin spatial présentant une chambre de combustion (11) et une tuyère (1),
- un système d'allumage (2) selon l'une des revendications 1 à 7,
ledit système d'allumage (2) étant inséré dans la tuyère (1) de manière à générer des étincelles dans ladite tuyère (1) et ainsi permettre un allumage de la chambre de combustion (11).

9. Procédé d'allumage d'un moteur d'engin spatial, dans lequel :
- on positionne (E1) un système selon l'une des revendications 1 à 7 dans la tuyère (1) d'un moteur d'engin spatial,
- on alimente en tension le circuit électrique de génération d'étincelles, de manière à générer des étincelles (E2) et ainsi initier la combustion dans une chambre à combustion du moteur (E3),
- une fois la combustion initiée, le système d'allumage est éjecté du divergent (E4).

## Patentansprüche

1. Zündsystem (2) für einen Raumfahrzeugmotor, der eine Verbrennungskammer (11), eine Düse (1) und eine elektrische Funkengeneratorschaltung aufweist, die dafür ausgelegt ist, um Funken in der Düse (1) zu generieren, um ein Zünden der Verbrennungskammer (11) auszulösen, wobei das Zündsystem (2) dafür geeignet ist, um in die Düse (1) eingesetzt zu werden,
wobei das Zündsystem (2) **dadurch gekennzeichnet ist, dass** es eine Basis (21) und einen Mast (22) umfasst, der dafür ausgelegt ist, um sich im Inneren der Düse (1) zu erstrecken, wenn die Basis (21) mit der Düse (1) in Eingriff gelangt, und dadurch, dass die elektrische Funkengeneratorschaltung an einem Ende des Masts (22) gegenüber der Basis (21) angeordnet ist.

2. Zündsystem (2) nach Anspruch 1, wobei die elektrische Funkengeneratorschaltung ein Tesla-Transformator ist.

3. Zündsystem (2) nach einem der Ansprüche 1 oder 2, wobei die elektrische Funkengeneratorschaltung umfasst: eine primäre Schaltung (3), umfassend einen Spannungsgenerator (31), einen Aufspanntransformator (32), eine Funkenstrecke (33), einen primären Kondensator (34) und eine primäre Spule (35), und eine sekundäre Schaltung (4), umfassend eine sekundäre Spule (41) und einen sekundären Kondensator (42), wobei der sekundäre Kondensator (42) dafür ausgelegt ist, um Lichtbögen zu generieren.

4. Zündsystem (2) nach Anspruch 3, wobei die primäre Schaltung (3) und die sekundäre Schaltung (4) dafür ausgelegt sind, um in Resonanz tretende Betriebsfrequenzen aufzuweisen.

5. Zündsystem (2) nach Anspruch 3 oder 4, wobei der Mast (22) aus metallisiertem Polystyrol hergestellt ist, wobei der sekundäre Kondensator (42) am Ende des Mastes (22) gebildet ist.

6. Zündsystem (2) nach einem der Ansprüche 1 bis 5, wobei die elektrische Funkengeneratorschaltung dafür ausgelegt ist, um die Funken auf der Höhe eines Halses (12) der Düse (1) zu generieren.

7. Zündsystem (2) nach einem der Ansprüche 1 bis 6, wobei die Basis (21) dafür geeignet ist, um mit einem freien Ende eines Ausstoßkonus (13) der Düse (1) in Eingriff zu gelangen, um ein Halten des genannten Zündsystems (2) in dem Ausstoßkonus (13) in Position zu gestatten.

8. Einheit, umfassend:
- einen Raumfahrzeugmotor, der eine Verbrennungskammer (11) und eine Düse (1) aufweist, und
- ein Zündsystem (2) nach einem der Ansprüche 1 bis 7,
wobei das genannte Zündsystem (2) in die Düse (1) eingesetzt ist, um Funken in der genannten Düse (1) zu generieren und so eine Zündung der Verbrennungskammer (11) zu gestatten.

9. Verfahren zum Zünden eines Raumfahrzeugmotors, wobei:
- ein System nach einem der Ansprüche 1 bis 7 in der Düse (1) eines Raumfahrzeugmotors positioniert wird (E1),
- die elektrische Funkengeneratorschaltung mit Spannung versorgt wird, um Funken zu generieren (E2) und so die Verbrennung in einer Verbrennungskammer des Motors zu initiieren (E3), und,
- sobald die Verbrennung initiiert ist, das Zündsystem aus dem Ausstoßkonus ausgestoßen wird (E4).

## Claims

1. An ignition system (2) for a spacecraft engine having a combustion chamber (11), a nozzle (1) and an electric spark-generating circuit configured to generate sparks in the nozzle (1), so as to cause an ignition of the combustion chamber (11); the ignition system (2) being adapted to be inserted in the nozzle (1),
the ignition system (2) being **characterized in that** it comprises a base (21), a mast (22) configured to extend within the nozzle (1) when the base (21) engages the nozzle (1), and **in that** the electric spark-generating circuit is located at one end of the mast (22) opposite to the base (21).

2. The ignition system (2) according to claim 1, wherein the electric spark-generating circuit is a Tesla transformer.

3. The ignition system (2) according to any of claims 1 or 2, wherein the electric spark-generating circuit comprises a primary circuit (3) comprising a voltage generator (31), a step-up transformer (32), a spark gap (33), a primary capacitor (34) and a primary coil (35), and a secondary circuit (4) comprising a secondary coil (41) and a secondary capacitor (42), the secondary capacitor (42) being configured to generate electric arcs.

4. The ignition system (2) according to claim 3, wherein the primary circuit (3) and the secondary circuit (4) are configured to present resonant operating frequencies.

5. The ignition system (2) according to claim 3 or 4, wherein the mast (22) is made of metallized polystyrene, the secondary capacitor (42) being formed at the end of the mast (22).

6. The ignition system (2) according to any of claims 1 to 5, wherein the electric spark-generating circuit is configured such that sparks are generated at a nozzle (1) throat (12).

7. The ignition system (2) according to any of claims 1 to 6, wherein the base (21) is adapted to engage a free end of a nozzle (1) divergent (13), so as to maintain in position said ignition system (2) in the divergent (13).

8. An assembly comprising:
- an engine of a spacecraft having a combustion chamber (11) and a nozzle (1),
- an ignition system (2) according to any of claims 1 to 7,
said ignition system (2) being inserted in the nozzle (1) so as to generate sparks in said nozzle (1) and thus allow an ignition of the combustion chamber (11).

9. A method for igniting a spacecraft engine, wherein:
- a system according to any of claims 1 to 7 is positioned (E1) in the nozzle (1) of a spacecraft engine,
- the electric spark-generating circuit is supplied with voltage so as to generate sparks (E2) and thus initiate the combustion in a combustion chamber of the engine (E3),
- once the combustion is initiated, the ignition system is ejected from the divergent (E4).
